# DEMANDE DE BREVET EUROPEEN

(11) **EP 3 564 586 A1**
(43) Date de publication de la demande: **06.11.2019**
(21) Numéro de dépôt: 19172311.3
(22) Date de dépôt: 02.05.2019
(51) Int. Cl.: F24B 1/182, A47J 37/07

(54) **SUPPORT POUR ACCESSOIRE DE CUISSON DESTINÉ AUX INSERTS/CHEMINÉES À CADRE MÉTALLIQUE**

(30) Priorité: 02.05.2018 FR 1870516
(71) Demandeur: Pantaloni, Ghjuvan-Battisti, 20133 Ucciani (FR)
(72) Inventeur: Pantaloni, Ghjuvan-Battisti, 20133 Ucciani (FR)
(74) Mandataire: Nicolle, Olivier

(57) **Abrégé**

Le support (1) pour accessoire de cuisson (25) est destiné aux insert/cheminée (20) à cadre métallique (21). Le support (1) comprend une colonne (2) configurée pour supporter un mécanisme de maintien (6) destiné au montage d'au moins un accessoire de cuisson (25). Au moins l'une des extrémités libres (51,52) de la colonne (2) est équipée d'un ou plusieurs aimants permanents (4) adaptés pour fixer/attacher la colonne (2) sur une paroi du cadre métallique (21) de l'insert/cheminée (20) tandis que le mécanisme de maintien (6) est réglé à une hauteur appropriée pour obtenir une cuisson optimale et maîtrisée.

## Description

La présente invention concerne un support pour accessoire de cuisson destiné aux inserts/cheminées à cadre métallique.

Elle trouve une application générale dans le domaine des grillades en intérieur et plus particulièrement des grillades dans des inserts ou des cheminées à cadre métallique.

On sait que lorsque les conditions météorologiques ne permettent plus de s'adonner aux grillades en extérieur, il est nécessaire de trouver une solution alternative en attendant le retour des beaux jours. Bon nombre de foyers étant équipés d'inserts ou de cheminées, la grillade en intérieur s'est imposée comme une excellente alternative.

Cependant, le cadre métallique des inserts ne possèdent pas d'aménagements (glissières ou rainures) pour supporter des accessoires de cuisson de type gril.

De plus, les inserts à cadre métallique sont le plus souvent surélevés par rapport au niveau du sol et généralement dotés d'un renfort pour éviter au bois de tomber hors de l'insert ou au bois de se coller à la vitre de l'insert. Il en résulte qu'il est non seulement difficile de placer à l'intérieur d'un insert un trépied en forme de U/T pour supporter un gril faute de place mais qu'il est en outre très difficile de régler un gril à la « bonne hauteur » par rapport aux braises pour avoir une cuisson optimale et maîtrisée.

La présente invention améliore la situation.

Elle porte sur un support pour accessoire de cuisson destiné aux inserts/cheminées à cadre métallique.

Selon une définition générale de l'invention, le support comprend une colonne configurée pour supporter un mécanisme de maintien destiné au montage d'au moins un accessoire de cuisson, et au moins l'une des extrémités libres de la colonne est équipée d'au moins un aimant permanent adapté pour fixer/attacher la colonne sur une paroi du cadre métallique de l'insert/cheminée tandis que le mécanisme de maintien est réglé à une hauteur appropriée pour obtenir une cuisson optimale et maîtrisée.

De façon surprenante, le Demandeur a observé que l'utilisation d'au moins un aimant associé à au moins l'une des extrémités d'une colonne est parfaitement adapté tant en terme de fixation que d'encombrement aux inserts/cheminées à cadre métallique. En outre, une telle colonne ainsi fixée au cadre métallique des inserts/cheminées permet un réglage approprié du mécanisme de soutien de l'accessoire de cuisson afin d'obtenir une cuisson optimale et maîtrisée et cela quelle que soit la hauteur du foyer de l'insert par rapport au sol.

Selon des modes particuliers de réalisation, le dispositif comporte une ou plusieurs caractéristiques suivantes, prise(s) isolément ou suivant toutes les combinaisons techniquement possibles :
- la colonne est télescopique, réglable en longueur/hauteur, et équipée sur chacune des extrémités libres d'une platine respective, chaque platine prenant appui sur l'une des parois du cadre métallique de l'insert/cheminée, et l'aimant permanent est placé entre au moins une platine et la paroi du cadre métallique associée ;
- un aimant permanent est placé entre chaque platine et la paroi du cadre métallique associée ;
- le support comprend en outre un dispositif de verrouillage adapté pour bloquer la colonne à une longueur/hauteur choisie ;
- le dispositif de verrouillage appartient au groupe formé par goupille/ perforations, aimant ;
- au moins l'une des parois du cadre métallique est de forme courbe et la forme de la platine associée est de forme conjuguée à celle de la paroi du cadre métallique;
- le mécanisme de maintien comprend un jeu d'au moins deux éléments de maintien faisant saillie par rapport à la colonne, et espacés l'un de l'autre d'une distance appropriée pour l'insertion et le maintien de l'accessoire de cuisson;
- le dispositif de maintien comprend un manchon, réglable en longueur/hauteur par l'intermédiaire d'une bague de blocage, ce qui permet le montage, au choix, de divers accessoires de cuisson;
- la colonne est positionnée entre la paroi supérieure et la paroi inférieure du cadre métallique de l'insert/cheminée ;
- la colonne est positionnée entre les deux parois latérales du cadre métallique de l'insert/cheminée.

D'autres avantages et caractéristiques de l'invention apparaîtront à l'examen de la description et des dessins dans lesquels :
- la **figure 1** est une vue de face du support pour accessoire de cuisson conformément à l'invention;
- la **figure 2** est une vue de dessus du support de la **figure 1**;
- la **figure 3A** est une vue de face d'un insert à cadre métallique plan équipé du support conforme à l'invention;
- la **figure 3B** est une vue de face d'un insert à cadre métallique arrondi équipé du support conforme à l'invention;
- la **figure 4** est une variante du dispositif de verrouillage du support conforme à l'invention;
- la **figure 5** est une variante d'agencement du support par rapport au cadre métallique conformément à l'invention; et
- la **figure 6** est une vue latérale illustrant une utilisation du support de la **figure 1** conformément à l'invention.

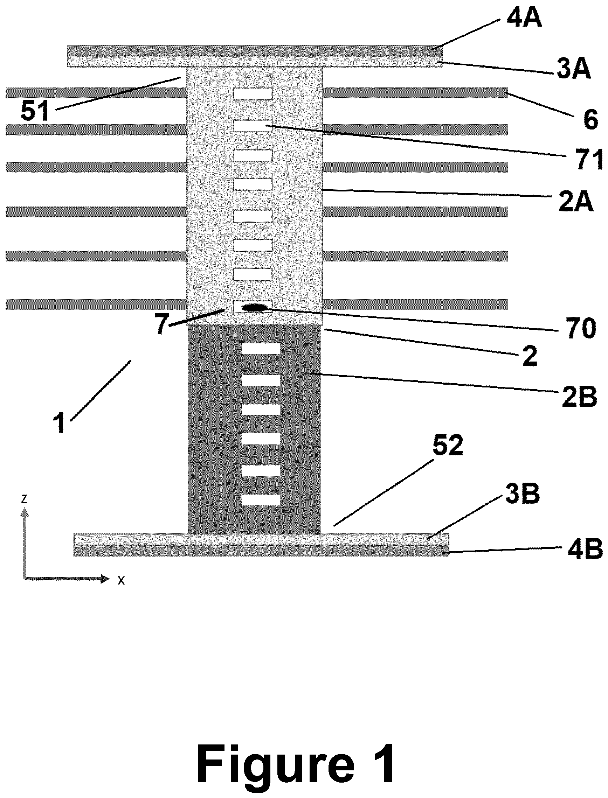

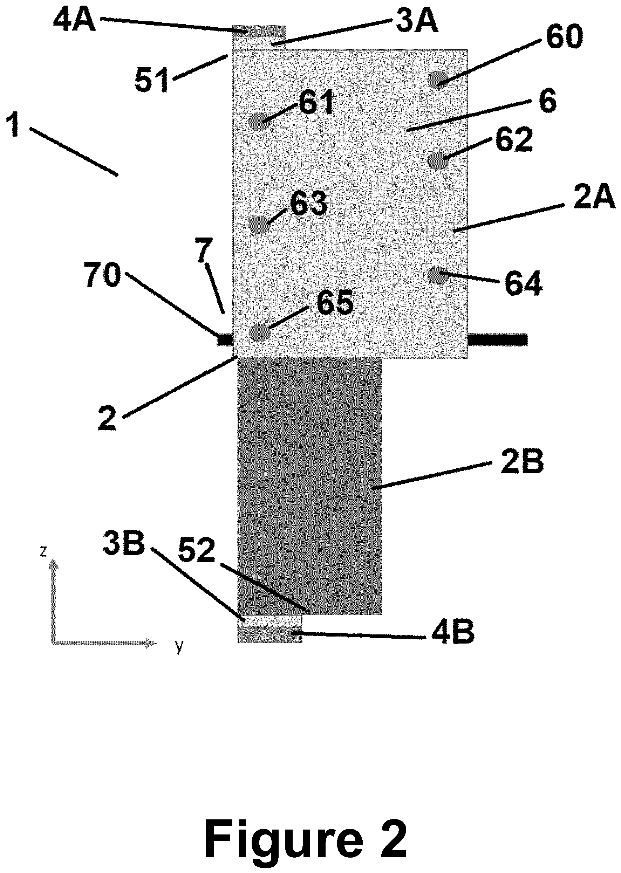

En référence aux **figures 1** et **2**, un dispositif formant support pour accessoire de cuisson, appelé support 1, comporte une colonne 2 de section transversale rectangulaire. Alternativement, la colonne 2 peut être de section circulaire, carrée, ovale ou triangulaire. La colonne 2 comprend deux tubes 2A et 2B qui s'emboîtent l'un dans l'autre de manière à former une colonne télescopique dont la hauteur/longueur est réglable en fonction de l'emboîtement et la coulisse des tubes 2A et 2B.

En pratique, l'extrémité libre 51 du tube 2A est prolongée d'une platine 3A. De même, l'extrémité libre 52 du tube 2B est prolongée d'une platine 3B. Les platines 3A et 3B sont disposées de manière perpendiculaire à l'axe longitudinal (axe Z du repère orthonormé) de la colonne 2. En pratique, la colonne 2 est réalisée en un matériau thermorésistant tel que fer, inox, acier, céramique.

De façon surprenante le Demandeur a observé que la plupart des inserts/cheminées 20 sont généralement équipés d'un cadre 21 fabriqué en un matériau métallique tel que la fonte. Le Demandeur a ensuite tiré profit de la propriété magnétisable du cadre métallique 21 pour associer de manière astucieuse des aimants à la colonne 2 afin d'obtenir un support d'accessoire de cuisson capable d'assurer une cuisson optimale et maîtrisée.

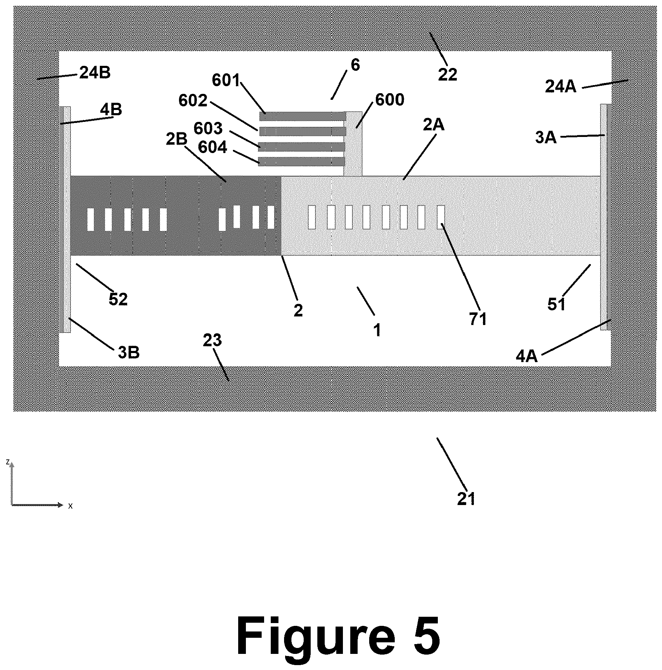

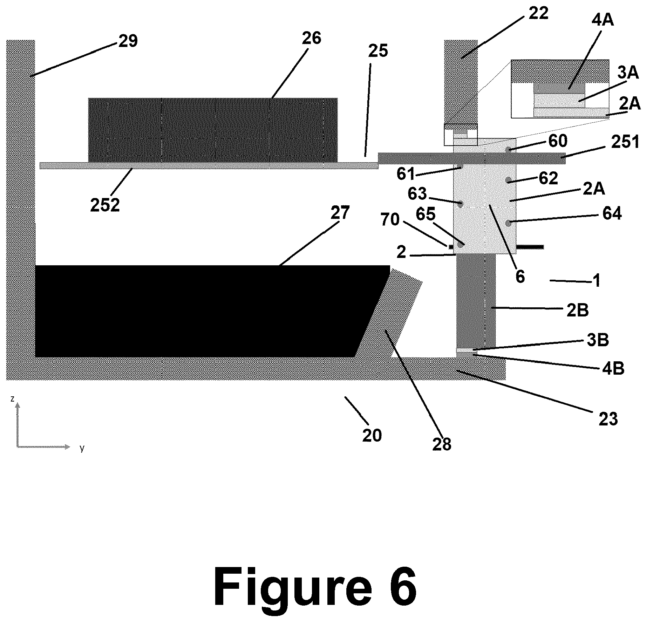

Par exemple, dans le cas d'un cadre parallélépipédique 21 constitué de deux parois latérales (référencées en 24A et 24B **figure 5**), d'une paroi inférieure (référencée en 23 **figure 5**) et d'une paroi supérieure (référencée en 22 **figure 5**), les aimants 4A et 4B peuvent être positionnés entre les platines 3A et 3B et les parois métalliques 22 et 23 (**figure 6**) ou entre les platines 3A et 3B et les parois latérales 24A et 24B (**figure 5**) du cadre 21. Comme on le décrira plus en détail ci-après, le choix et le positionnement des aimants sont des critères relativement importants à suivre pour permette un bon positionnement et fixation du support et assurer ainsi une cuisson optimale et maîtrisée.

En pratique, les aimants 4A et 4B sont disposés sur les platines respectivement 3A et 3B dans le sens de leur polarisation axiale.

Les aimants 4A et 4B sont aptes à fixer de manière amovible le support 1 sur l'encadrement métallique 21 de l'insert/cheminée 20.

En pratique, les aimants 4A et 4B appartiennent au groupe formé par les aimants de type néodyme car ce type supporte une température élevée allant jusqu'à 230°C (début de la démagnétisation) et sont réversibles.

Le Demandeur a observé que peuvent être utilisés ici les aimants de type néodyme allant de N30 à N52, M30 à M50, H27 à H48, SH27 à SH45, UH25 à UH 40, EH25 à EH42, AH28 à AH40. Les désignations précédentes indiquent un niveau qualité du matériau utilisé dans laquelle la partie numérique correspond sensiblement au taux énergétique maximum de l'aimant en Mega Gauss Oersteds (MGOe) et dans laquelle les lettres correspondent à la température maximum d'utilisation, N étant la plus faible température d'utilisation et AH la plus élevée. Ainsi, préférentiellement mais de façon non limitative, les aimants 4A et 4B utilisés ici peuvent être ceux commençant par la lettre « N » avec une température d'utilisation maximum de 80°C. Au-delà de 80°C et jusqu'à 130°C la démagnétisation est réversible et la température de Curie est de 310°C.

En variante, une seule extrémité libre de la colonne est équipée d'un couple platine/aimant.

En pratique, les aimants 4A et 4B sont fixés sur les platines 3A et 3B à l'aide de moyens de fixation appartenant au groupe formé par vis, colle ou analogue.

Avantageusement, dans le cas d'une fixation par vis, l'aimant est perforé avec un trou biseauté afin de ne pas gêner le contact entre l'aimant 4A ou 4B et la paroi du cadre métallique 21 correspondante.

Avantageusement, la colonne 2 comprend en outre un dispositif de verrouillage 6 apte à bloquer la colonne 2 à une longueur/hauteur choisie. Le dispositif de verrouillage 6 comprend une pluralité de perforations 71 ménagées dans au moins l'un des tubes de la colonne et aptes à recevoir une goupille 70. L'agencement des perforations 71 est tel que la goupille 70, une fois insérée dans la perforation empêche l'élongation ou le raccourcissement de la colonne 2.

Par exemple, des perforations 71 sont ménagées sur les deux tubes 2A et 2B de la colonne 2 qui, lorsqu'elles sont mises en regard l'une de l'autre autorisent l'insertion d'une goupille de sécurité 70.

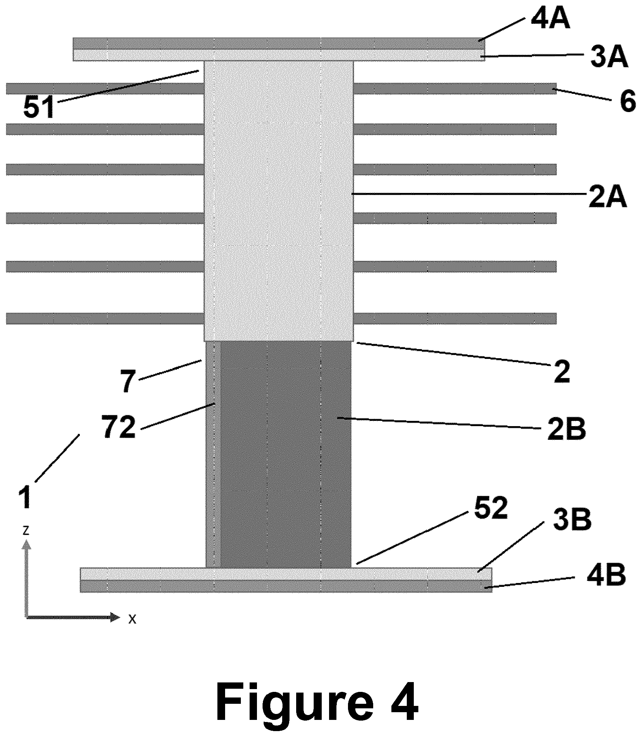

Alternativement (**figure 4**), le dispositif de verrouillage peut être réalisé à partir d'un aimant 72 afin de s'affranchir de la goupille 70. Ce mode de réalisation sera décrit plus en détail en référence à la **figure 4**.

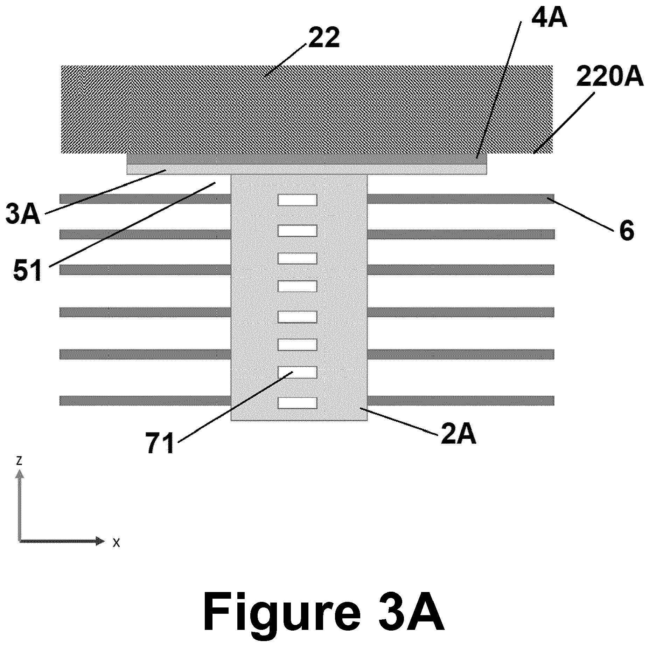

En référence à la **figure 3A**, la platine 3A est de géométrie plane afin de s'adapter /d'épouser au mieux la paroi supérieure 22 du cadre métallique de l'insert présentant également une surface de contact plane 220A. Un aimant permanent 4A, fixé sur la platine 3A, est également de géométrie plane et de même dimensions que la platine 3A afin d'assurer un maintien /fixation optimal du support 1.

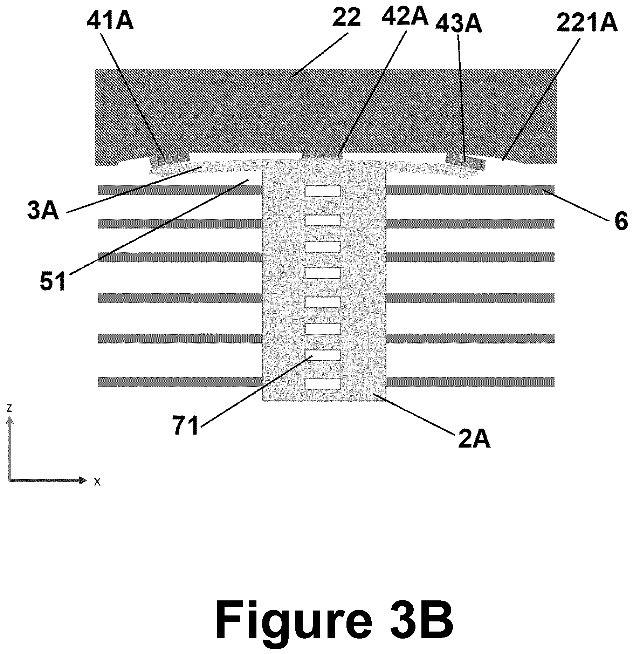

En référence à la **figure 3B**, le support 1 peut également être adapté à une paroi supérieure 22 d'insert 20 présentant une surface de contact arrondie 221A. Ainsi, la platine 3A est choisie de forme arrondie afin de s'adapter/d'épouser au mieux la surface de contact arrondie 221A. Une pluralité d'aimants (41A, 42A, 43A) de petite taille et de géométrie plane ou courbe sont répartis et fixés sur la platine 3A afin d'assurer la fixation de manière amovible du support 1 sur la surface de contact 221A.

Alternativement, la platine 3A peut être de différentes formes ou géométries adaptées aux formes et géométries de la paroi supérieure 22 du cadre métallique 21.

En référence à la **figure 4**, le dispositif de verrouillage est réalisé en variante à l'aide d'un mécanisme magnétique. Par exemple le mécanisme magnétique comprend un aimant 72 disposé sensiblement sur toute la hauteur d'une face extérieure du tube ayant les plus petites dimensions 2B afin de créer une force de frottement statique non négligeable, due à l'attraction du tube de plus grande section 2A et de l'aimant 72. L'aimant 72 est choisi de telle sorte que son intensité d'attraction n'empêche pas le mouvement de coulisse des tubes 2A et 2B suite à une action volontaire de l'Utilisateur. Alternativement, l'aimant 72 peut être disposé sur l'une des faces internes du tube 2A. Les dimensions relatives des deux tubes 2A et 2B de la colonne 2 sont adaptées en conséquence pour autoriser la coulisse d'un tube par rapport à l'autre. La géométrie de l'aimant 72 est adaptée à la géométrie des faces externes des tubes 2A et 2B en ce qu'elle est de largeur et de longueur égale ou inférieure à celles de la face externe sur laquelle il est apposé. Alternativement, l'aimant peut être parallélépipédique, parallélépipédique rectangle, ou circulaire. De préférence, l'aimant 72 est aussi de type néodyme.

En référence à la **figure 5**, on a représenté une variante dans laquelle les platines 3A et 3B, équipées respectivement des aimants 4A et 4B viennent se fixer contre les parois latérales 24A et 24B du cadre métallique 21 de l'insert/cheminée 20. Le dispositif de maintien 6 est adapté en ce qu'il est agencé parallèlement à la colonne 2 (axe X du repère orthonormé) pour maintenir l'accessoire de cuisson 25 à une distance choisie au-dessus de la source de chaleur 27 de l'insert/cheminée 20. Le dispositif de maintien 6 comprend un tube 600 fixé perpendiculairement sur la face de la colonne 2, plus précisément du tube 2A, en regard de la paroi supérieure 22 du cadre métallique 21 de l'insert/cheminée 20. Une pluralité de tiges 601, 602, 603, 604, parallèles à l'axe X du repère orthonormé, font saillies du tube 600, dans le plan formé par le cadre métallique 21 de l'insert/cheminée 20, de manière à recevoir et à maintenir un accessoire de cuisson 25 au-dessus du foyer de l'insert/cheminée 20 à une hauteur choisie. Alternativement, le tube 600 peut ne pas être perpendiculaire à la colonne 2A (axe X du repère orthonormé) si les tiges 601, 602, 603 et 604 sont parallèles à la dite colonne 2A. Le nombre et les dimensions des tiges 601, 602, 603 et 604 peuvent varier.

En référence à la **figure 6**, le support 1 est disposé dans un insert/cheminée 20. Un accessoire de cuisson de type gril 25 est monté sur le mécanisme de maintien 6 de la colonne 2. Le support 1 est disposé sensiblement parallèlement au fond 29 de l'insert/cheminée et à l'axe Z du repère orthonormé entre la paroi supérieure 22 et la paroi inférieure 23 de l'insert avec lesquelles sont en contact respectivement les aimants 4A et 4B. La goupille 70 est insérée dans une perforation (non représentée) afin de maintenir la colonne 2 à une longueur adéquate pour une cuisson optimale et maîtrisée. Une source de chaleur 27 (bois, braises, gaz) est placée sur la paroi inférieure 23 (parallèle à l'axe Y) de l'insert. Un renfort 28 est adapté pour empêcher le bois 27 de se déplacer hors de l'insert/cheminée 20 ou de venir se coller contre la vitre (non représentée) du dit insert/cheminée 20. Un accessoire de cuisson 25 supportant l'aliment à cuire 26 est alors inséré dans l'insert/cheminée 20 sensiblement parallèlement à l'axe Y du repère orthonormé. Le manche 251 de l'accessoire de cuisine est inséré entre deux tiges 60 et 61 du dispositif de maintien 6 de façon maintenir l'accessoire de cuisson 25 fixe dans une position choisie. La hauteur de l'accessoire de cuisson 25 peut être adaptée en fonction du couple de tiges 60, 61 ou 62, 63 choisi afin de contrôler la hauteur de la zone de cuisson 252 de l'accessoire de cuisson 25 par rapport à la source de chaleur 27 et donc la cuisson de façon optimale et maîtrisée.

## Revendications

1. Support (1) apte à supporter un accessoire de cuisson (25) dans un/une insert/cheminée (20) à cadre métallique (21), **caractérisé en ce que** le support (1) comprend une colonne (2) apte à supporter un mécanisme de maintien (6) destiné au montage d'au moins un accessoire de cuisson (25), et **en ce qu'**au moins l'une des extrémités libres (51,52) de la colonne (2) est équipée d'au moins un aimant permanent (4) apte à résister à une démagnétisation en cas d'exposition à une température maximale de 310°C et adapté pour fixer/attacher la colonne (2) sur une paroi du cadre métallique (21) de l'insert/cheminée (20) tandis que le mécanisme de maintien (6) est réglé à une hauteur appropriée pour obtenir une cuisson optimale et maîtrisée.

2. Support (1) selon la revendication 1, **caractérisé en ce que** la colonne (2) est télescopique, réglable en longueur/hauteur et équipée sur chacune des extrémités libres (51,52) d'une platine respective (3A, 3B) **en ce que** chaque platine (3A, 3B) est apte à prendre appui sur l'une des parois du cadre métallique (21) de l'insert/cheminée (20) et **en ce qu'**au moins un aimant permanent (4) est placé entre au moins une platine (3A, 3B) et la paroi du cadre métallique (21) associée.

3. Support (1) selon la revendication 2, **caractérisé en ce qu'**un aimant permanent (4) est placé entre chaque platine (3A, 3B) et la paroi du cadre métallique (21) associée.

4. Support (1) selon l'une des revendications 1 à 3, **caractérisé en ce que** le support (1) comprend en outre un dispositif de verrouillage (7) adapté pour bloquer la colonne (2) à une longueur/hauteur choisie.

5. Support (1) selon la revendication 4, **caractérisé en ce que** le dispositif de verrouillage (7) appartient au groupe formé par goupille (70) / perforations (71), aimant (72).

6. Support (1) selon l'une des revendications 1 à 5, caractérisé en ce l'aimant permanent (4) de la colonne (2) soit de type néodyme et appartient au groupe formé par N30 à N52, M30 à M50, H27 à H48, SH27 à SH45, UH25 à UH40, EH25 à EH42 et AH28 à AH40.

7. Ensemble constitué d'un insert/cheminée à cadre métallique et d'un support (1) selon l'une quelconque des revendications 1 à 6, **caractérisé en ce qu'**au moins l'une des parois du cadre métallique (21) est de forme courbe et la forme de la platine (3A) associée est de forme conjuguée à celle de la paroi du cadre métallique.

8. Ensemble selon la revendication 7 comportant en outre un mécanisme de maintien (6), **caractérisé en ce que** le mécanisme de maintien (6) comprend un jeu d'au moins deux éléments de maintien faisant saillie par rapport à la colonne, et espacés l'un de l'autre d'une distance appropriée pour l'insertion et le maintien de l'accessoire de cuisson (25).

9. Ensemble selon la revendication 7 ou 8, **caractérisé en ce que** le dispositif de maintien (6) comprend un manchon, réglable en longueur/hauteur par l'intermédiaire d'une bague de blocage, ce qui permet le montage, au choix, de divers accessoires de cuisson (25).

10. Ensemble selon l'une des revendications 7 à 9, **caractérisé en ce que** le positionnement de la colonne (2) par rapport au cadre métallique (21) de l'insert/cheminée (20) appartient au groupe formé par : entre les deux parois latérales (24A et 24B) du cadre métallique (21) ; et entre la paroi supérieure (22) et la paroi inférieure (23) du cadre métallique (21).
